(19) **Europäisches Patentamt / European Patent Office / Office européen des brevets**

(11) **EP 1 297 492 B1**

(12) ## EUROPEAN PATENT SPECIFICATION

(45) Date of publication and mention of the grant of the patent:
**28.03.2007  Bulletin 2007/13**

(21) Application number: **01957869.9**

(22) Date of filing: **18.06.2001**

(51) Int Cl.:
*G06T 1/00* (2006.01)

(86) International application number:
**PCT/EP2001/006945**

(87) International publication number:
**WO 2001/099049 (27.12.2001 Gazette 2001/52)**

(54) **WATERMARK EMBEDDING METHOD AND ARRANGEMENT**

WASSERZEICHENEINBETTUNGSVERFAHREN UND -ANORDNUNG

PROCEDE ET ARRANGEMENT D'INCORPORATION DE FILIGRANE

(84) Designated Contracting States:
**AT BE CH CY DE DK ES FI FR GB GR IE IT LI LU MC NL PT SE TR**

(30) Priority: **23.06.2000  EP 00202199**

(43) Date of publication of application:
**02.04.2003  Bulletin 2003/14**

(73) Proprietor: **Koninklijke Philips Electronics N.V.**
**5621 BA  Eindhoven (NL)**

(72) Inventors:
• **HAITSMA, Jaap, A.**
  **NL-5656 AA Eindhoven (NL)**
• **KALKER, Antonius, A., C., M.**
  **NL-5656 AA Eindhoven (NL)**

(74) Representative: **Schmitz, Herman Jan Renier**
**Philips**
**Intellectual Property & Standards**
**P.O. Box 220**
**5600 AE  Eindhoven (NL)**

(56) References cited:
**EP-A- 1 136 946**

• **SWANSON M D ET AL: "MULTIRESOLUTION VIDEO WATERMARKING USING PERCEPTUAL MODELS AND SCENCE SEGMENTATION" PROCEEDINGS OF THE INTERNATIONAL CONFERENCE ON IMAGE PROCESSING. ICIP 1998. SANTA BARBARA, CA, OCT. 26 - 29, 1997, LOS ALAMITOS, CA: IEEE COMPUTER SOCIETY, US, vol. 2, October 1997 (1997-10), pages 558-561, XP000669444 ISBN: 0-8186-8184-5**
• **SHIOZAKI A: "IMPROVEMENT TO A METHOD OF EMBEDDING ROBUST WATERMARKS INTO DIGITAL COLOR IMAGES" IEICE TRANSACTIONS ON FUNDAMENTALS OF ELECTRONICS, COMMUNICATIONS AND COMPUTER SCIENCES, INSTITUTE OF ELECTRONICS INFORMATION AND COMM. ENG. TOKYO, JP, vol. E82-A, no. 5, May 1999 (1999-05), pages 861-864, XP000955144 ISSN: 0916-8508**

## Description

FIELD OF THE INVENTION

The invention relates to a method and arrangement for embedding a watermark in an information signal in accordance with the preamble of claim 1 and 5 respectively. More particularly, the invention relates to embedding a watermark in a motion video signal.

BACKGROUND OF THE INVENTION

Watermarking is a technique to certify the ownership of (digital) information content. By imperceptibly hiding a watermark in the content, it is possible to prevent piracy and illegal use of this content. Typical applications include copy protection for digital audio and video, and broadcast monitoring.

The watermark, typically a given pseudo random noise sequence, is usually added to the content in the original (temporal or spatial) signal domain. Most currently used watermark detection methods are based on correlating the suspect signal with the pseudo-random noise sequence. If the correlation exceeds a given threshold, the watermark is said to be present.

A method and apparatus in accordance with the preambles of claim 1 and 5, respectively, is disclosed in EP-A-1 136 946. which is a publication according to Art. 54(3) and (4) EPC.

An other example of a prior-art watermark embedding method is disclosed in International Patent Application WO-A-99/45707. The prior-art method relates to watermarking a motion video signal. For complexity reasons, the same watermark is embedded in every image (field or frame) of the video signal. To reduce the complexity even more, a small watermark pattern is tiled over the image. A typical tile size is $128 \times 128$ pixels. At the detection side, the tiles of a number of images are folded into a 128x128 buffer. Detection is then performed by correlating the buffer contents with the small watermark pattern.

The pseudo-random noise sequence is a secret key. When a hacker knows the sequence and the embedding algorithm, he can obtain an estimate of the embedded watermark, for example, by adding a large number of tiles. He can then remove the watermark by subtracting the estimated sequence from the watermarked signal.

OBJECT AND SUMMARY OF THE INVENTION

It is an object of the invention to provide a method and arrangement for embedding a watermark in a more secure manner.

To this end, the method of embedding a watermark in an information signal is characterized by the step of randomizing the magnitudes of the Fourier coefficients of said watermark.

The apparatus according to the invention is characterized by comprising means for randomizing the magnitudes of the Fourier coefficients of said watermark.

The invention is based on the recognition that detection methods are often invariant with respect to predetermined properties of the embedded watermark. For example, the prior-art detection method disclosed in the above-cited International Patent Application WO-A-99/45707 is invariant with respect to the magnitudes of the Fourier transformed image.

The prior-art detection method is also shift-invariant. Accordingly, the step of generating different versions of the watermark includes randomly shifting (for example, at a low temporal frequency) the spatial position of the watermark with respect to the video image in a second embodiment of the invention.

Another watermark detection method, proposed in Applicant's European Patent Application 99203143.5 (not published) is invariant to scaling and rotation of the embedded watermark. In combination with such a detector, the embedded watermark may be randomly scaled and/or rotated.

It is thus achieved with the invention that a range of watermarks is embedded, which watermarks are different in the signal domain but will be seen as the same by the detection algorithm.

UK Patent Application GB 2 325 765 discloses a method of hiding data in a video signal, in which method frame patterns of differing block patterns are embedded in the video frames. A random element is introduced into a block pattern. More particularly, a specific block pattern is randomly added to and subtracted from the video signal at the same location of each frame. A detection pattern is used that does not include the random element The random element causes +1 or -1 to appear at random at the output of the detector. The detector does not appear to be invariant with respect to the sign of the embedding operation. This prior-art document therefore does not disclose randomizing a property which is irrelevant for detection of the watermark.

BRIEF DESCRIPTION OF THE DRAWINGS

Fig. 1 is a schematic diagram of a first embodiment of an arrangement for embedding a watermark in a video signal in accordance with the invention.
Fig. 2 is a diagram illustrating the operation of a payload encoder which is shown in Fig. 1.
Fig. 3 shows a watermark embedded in a video signal by the arrangement which is shown in Fig. 1.
Figs. 4 and 5 show alternative embodiments of the arrangement which is shown in Fig. 1.
Fig. 6 shows a watermark embedded in a video signal by the arrangements which are shown in Fig. 4 or 5.
Fig. 7 is a schematic diagram of an arrangement for detecting a watermark in a suspect video signal.

Figs. 8A and 8B show correlation patterns illustrating the operation of the detector which is shown in Fig. 7.

Fig. 9 is a schematic diagram of a second embodiment of an arrangement for embedding a watermark in a video signal in accordance with the invention.

Fig. 10 shows a watermark embedded in a video signal by the arrangement which is shown in Fig. 9.

Figs. 11A and 11B show correlation patterns illustrating the operation of the detector which is shown in Fig. 7.

## DESCRIPTION OF PREFERRED EMBODIMENTS

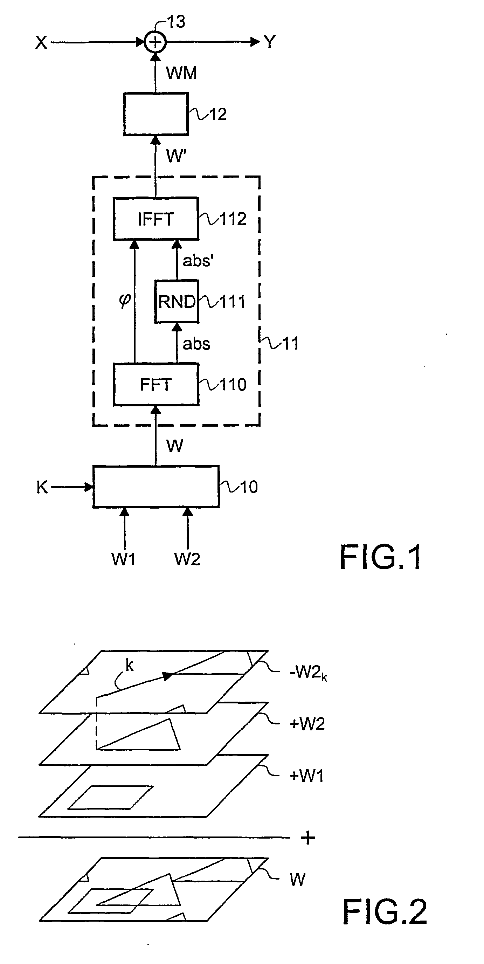

The invention will be described with reference to embedding a watermark in motion video signals. It will be appreciated that the description may equally be applied to other types of information signals. Fig. 1 is a schematic diagram of a first embodiment of an arrangement in accordance with the invention. The arrangement is a further improvement of the embedder disclosed in International Patent Application WO-A-99/45707.

The arrangement receives a motion video signal X and outputs a watermarked video signal Y. It comprises a payload encoder **10,** a property randomizer **11,** a tiling circuit **12,** and an adder **13.** Fig. 2 illustrates the operation of the payload encoder **10.** A watermark pattern W is obtained by adding a limited set of uncorrelated "basic" watermark patterns (W1, W2) and cyclically shifted versions ($W2_k$) thereof. In this example, the encoder **10** generates $W=W1+W2-W2_k$, where $W2_k$ is a cyclically shifted version of basic pattern W2. The signs and shift vectors (k) represent a payload K. To reduce complexity, the watermark pattern W has a relatively small size of MxM (e.g. $128\times128$) pixels. It is tiled over the larger $N1\times N2$ image area by the tiling circuit **12.** In the prior-art arrangement, the same watermark tile W is tiled over the image. Moreover, the same watermark WM is embedded in successive frames of a motion video signal.

The arrangement, which is shown in Fig. 1, includes a property randomizer **11.** The watermark tile W to be embedded is herein subjected to a Fast Fourier Transform **110.** The Fourier coefficients have a magnitude abs and a phase φ. The magnitudes abs are randomized (or replaced by random magnitudes) by a randomizing circuit **111.** The randomized magnitudes abs' and original phases φ are then back-transformed to the spatial domain by an inverse Fast Fourier Transform **112.** The watermark tile W' thus produced differs from the watermark tile W in the spatial domain

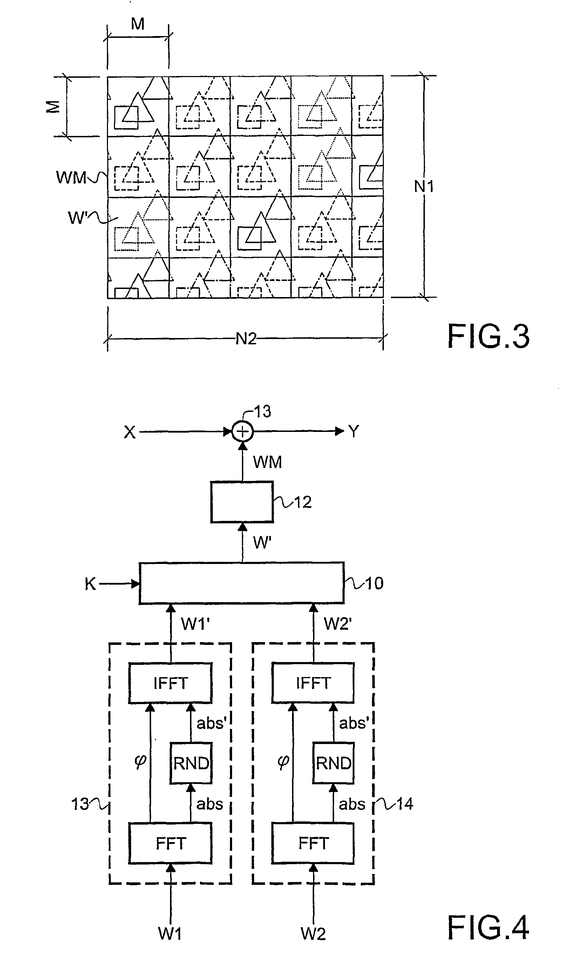

The property randomizer **11** produces a different watermark pattern W' for each tile of the image. Fig. 3 shows the watermark WM after the tiling operation **12.** In this Figure, the property which is irrelevant for the detection process (i.e. the magnitudes of the Fourier coefficients) is represented by the line style. This property differs from tile to tile. The property which is relevant for the detection process (i.e. the phases of the Fourier coefficients) is represented by the respective symbols and is the same for each tile. The watermark tiles are different in the spatial domain and are therefore difficult to hack.

Fig. 4 shows an alternative embodiment of the watermark embedder with which the same effect is achieved. This embodiment differs from that shown in Fig. 1 in that the property randomizing operation is individually applied to the basic watermark patterns W1 and/or W2 before encoding the payload. For each basic watermark, a respective property randomizer **13,14** is used which is similar to randomizer **11** in Fig. 1.

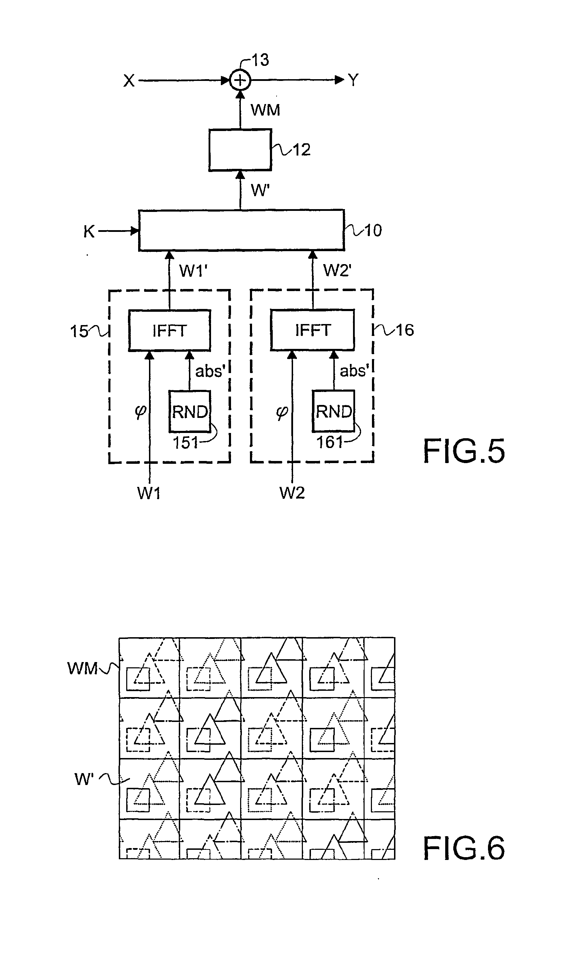

Fig. 5 shows a variant of this embodiment. Herein, the basic watermark patterns are defined in the Fourier domain rather than the spatial domain. More particularly, the basic watermarks W1 and W2 are defined in terms of the phases φ of Fourier coefficients. The respective property randomizers **15,16** no longer need to have Fast Fourier Transform circuits (cf. **110** in Fig. 1). The magnitudes or the Fourier coefficients are now randomly generated by random generators **151** and **161,** respectively.

It should be noted that the property randomizers **13,14** (Fig. 4) and **15,16** (Fig. 5) need not be physically present in the respective embedders. It is possible to pre-store a plurality of randomized versions of each basic watermark pattern in the embedder. In that case, the embedder (randomly) selects one of the stored versions for each image tile.

Fig. 6 shows the tiled watermark WM generated by the embodiments shown in Figs. 4 and 5. The watermark differs from that shown in Fig. 3 in that the basic pattern W1, on the one hand, and the patterns W2 and $W2_k$, on the other hand, are differently randomized.

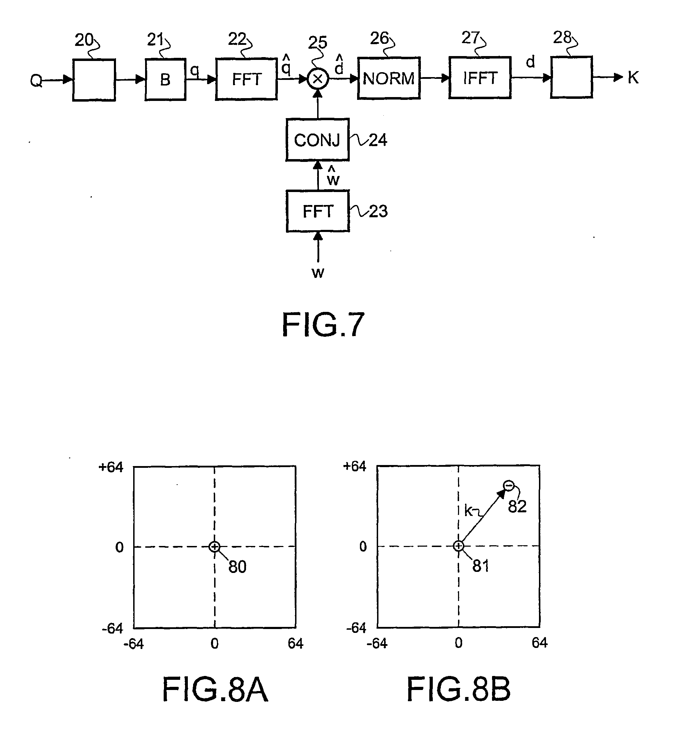

For completeness of the disclosure of the invention, the operation of the watermark detector will now be briefly summarized. A more detailed description can be found in International Patent Application WO-A-99/45707. Fig. 7 is a schematic diagram of the arrangement. The detector partitions **(20)** each image of a suspect video signal Q into blocks of size $M\times M$ (M=128) and stacks **(21)** all the blocks in a buffer B of size $M\times M$. This operation is known as folding. To detect whether or not the contents q of the folding buffer B include a particular (possibly shifted) basic watermark pattern w (W1 or W2), the buffer contents and said basic watermark pattern are subjected to correlation. Both the contents q of the buffer and the basic watermark pattern w are subjected to a Fast Fourier Transform (FFT) in transform circuits **22** and **23,** respectively. These operations yield:

$$\hat{q} = \mathrm{FFT}(q)$$

and

$$\hat{w} = \mathrm{FFT}(w),$$

where $\hat{q}$ and $\hat{w}$ are sets of complex numbers. Computing the correlation is similar to computing the convolution of q and the conjugate of w. In the transform domain, this corresponds to:

$$\hat{d} = \hat{q} \otimes \text{conj}(\hat{w})$$

where the symbol $\otimes$ denotes pointwise multiplication and conj() denotes conjugation. The conjugation (inverting the sign of the imaginary part) of $\hat{w}$ is carried out by a conjugation circuit **24,** and the pointwise multiplication is carried out by a multiplier **25.** Note that FFT **23** and conjugation **24** of the applied watermark W can be pre-computed and stored in a memory.

The Fourier coefficients $\hat{d}$ are complex numbers. As disclosed in International Patent Application WO-A-99/45707, the reliability of the detector is significantly improved if the magnitude information is thrown away and the phase is considered only. To this end, the detector includes a magnitude normalization circuit **26,** which pointwise divides each coefficient by its magnitude:

$$\hat{d} := \hat{d} \, \Phi \, \text{abs}(\hat{d})$$

where $\Phi$ denotes pointwise division.

An M$\times$M pattern of correlation values d={$d_k$} is now obtained by inverse Fourier transforming the result of said multiplication:

$$d = \text{IFFT}(\hat{d})$$

which is carried out by an inverse FFT circuit **27.** The basic watermark pattern W is detected to be present if a correlation value $d_k$ is larger than a given threshold. Fig. 8A shows that the MxM correlation pattern exhibits a strong positive peak **80** at the origin (0,0) if the basic watermark W1 is applied to the arrangement. The location (0,0) of the peak indicates that the spatial position of the applied watermark pattern corresponds to the spatial position of the embedded watermark in the folding buffer. Fig. 8B shows that the correlation pattern exhibits a strong positive peak **81** at the origin (0,0) and a strong negative peak **82** at another location if the basic watermark W2 is applied to the arrangement. The relative distance between, and the signs of, peaks **81** and **82** represent the shift vector k. A payload decoder **28** (Fig. 7) identifies said shift vector k and decodes the corresponding payload data K.

A potential hacker will obtain an estimate of the phases of the watermark when he adds a large number of tiles. He may mislead the detector by choosing random magnitudes for the watermark and then subtracting the estimated watermark from the watermarked video signal. However, this will introduce artifacts because the embedded watermark is spatially different from the estimated watermark.

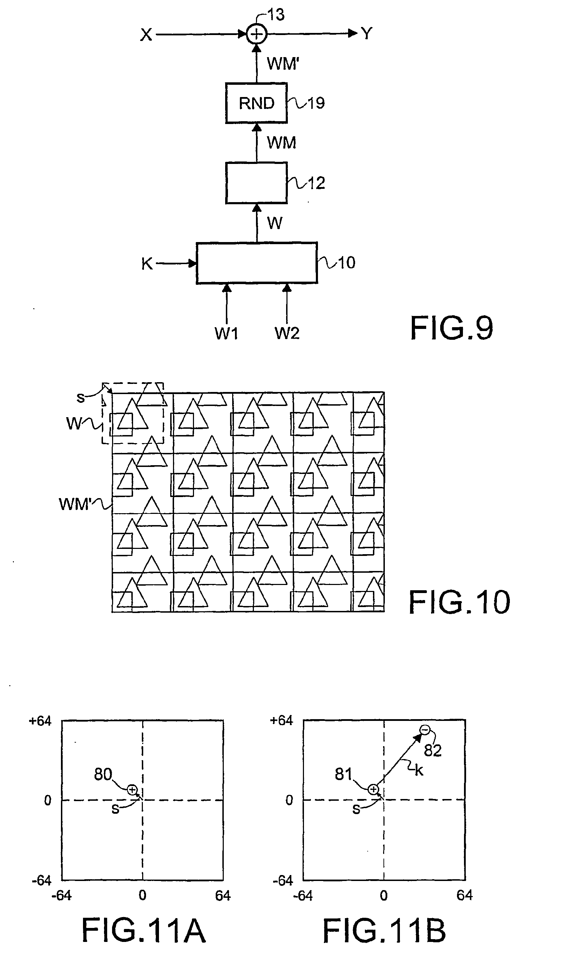

Fig. 9 is a schematic diagram of a further embodiment of the watermark embedder in accordance with the invention. In this embodiment, the property of the watermark WM being randomized is its spatial position with respect to the image area. To this end, the arrangement comprises a position randomizer **19.** In this example, the randomizer is located between the tiling circuit **12** and the adder **13.** Alternatively, the randomizer may be positioned between payload encoder **10** and tiling circuit **12.**

Fig. 10 shows a tiled watermark WM' generated by this embodiment. It has been cyclically shifted by a vector s compared with the watermark WM shown in Figs. 3 and 6. Advantageously, the position is modified from frame to frame at a relatively low frequency. Figs. 11A and 11B show the M$\times$M correlation patterns if the basic watermark patterns W1 and W2, respectively, are applied to the detector. The peaks **80-82** have been shifted by the vector s compared with the peaks shown in Figs. 8A and 8B. However, the relative distance between, and the signs of, the peaks representing the shift vector k (and thus the payload data K) have not been changed.

The embodiments described above (randomizing of magnitudes and randomizing of position) may be advantageously combined.

In summary, an arrangement for embedding a watermark in an information signal is disclosed. In order to make the embedded watermark more robust against hacking, a property of the watermark is randomized (11) which is irrelevant for the watermark detection. One example is randomizing (111) the magnitudes (abs) of the Fourier-transformed watermark. Another example is randomly shifting the spatial or temporal position of the watermark with respect to the signal at a relatively low temporal frequency. The invention allows embedding (13) of spatially different watermarks without affecting the performance of a detector.

**Claims**

1. A method of embedding (12, 13) a watermark (WM) in an information signal (X), wherein different versions of said watermark are embedded in successive portions of the information signal, said versions being different with respect to a property ($\varphi$) which is irrelevant for detection of said watermark, **characterized by** the step of randomizing (111) the magnitudes (abs) the Fourier coefficients of said watermark.

2. A method as claimed in claim 1, wherein the watermark includes at least one basic watermark pattern being tiled over the portion of the information signal, said step of randomizing the magnitudes being applied to the Fourier coefficients of said basic watermark pattern.

3. A method as claimed in claim 1, comprising the step of randomizing the position of the watermark with respect to the respective portion of the information signal.

4. A method as claimed in claim 1, wherein said successive portions of the information signal are successive frames of a motion video signal.

5. An arrangement for embedding a watermark (WM) in an information signal (X), comprising means (11, 12, 13) for embedding different versions of said watermark in successive portions of the information signal, said versions being different with respect to a property (φ) which is irrelevant for detection of said watermark, **characterized by** comprising means (111) for randomizing the magnitudes of the Fourier coefficients of said watermark.

6. An arrangement as claimed in claim 5, comprising means for randomizing the position of the watermark with respect to the respective portion of the information signal.

7. An arrangement as claimed in claim 5, wherein said successive portions of the information signal are successive frames of a motion video signal.

8. An information signal with an embedded watermark, **characterized in that** successive portions of said signal have different versions of said watermark embedded, said versions being different with respect to a property which is irrelevant for detection of said watermark, **characterized in that** the magnitudes of the Fourier coefficients of said watermark are randomized.

**Patentansprüche**

1. Verfahren zum Einbetten (12, 13) eines Wasserzeichens (WM) in ein Informationssignal (x), wobei verschiedene Versionen des genannten Wasserzeichens in aufeinander folgende Teile des Informationssignals eingebettet werden, wobei die genannten Versionen in Bezug auf eine Eigenschaft (φ) verschieden sind, wobei diese Eigenschaft für die Detektion des genannten Wasserzeichens irrelevant ist, **gekennzeichnet durch** den Schritt der Randomisierung (111) der Größen (abc) der Fourier-Koeffizienten des genannten Wasserzeichens.

2. Verfahren nach Anspruch 1, wobei das Wasserzeichen wenigstens ein Wasserzeichenmuster aufweist, das über den Teil des Informationssignals gestapelt ist, wobei der genannte Schritt der Randomisierung der Größen auf die Fourier-Koeffizienten des genannten Basiswasserzeichenmusters angewandt wird.

3. Verfahren nach Anspruch 1, das den Schritt der Randomisierung der Lage des Wasserzeichens in Bezug auf den betreffenden Teil des Informationssignals umfasst.

4. Verfahren nach Anspruch 1, wobei die genannten aufeinander folgenden Teile des Informationssignals aufeinander folgende Frames eines bewegenden Videosignals sind.

5. Anordnung zum Einbetten eines Wasserzeichens (WM) in ein Informationssignal (x), die Mittel (11, 12, 13) aufweist zum Einbetten verschiedener Versionen des genannten Wasserzeichens in aufeinander folgende Teile des Informationssignals, wobei die genannten Versionen in Bezug auf eine Eigenschaft (φ) verschieden sind, die für die Detektion des genannten Wasserzeichens irrelevant ist, **gekennzeichnet durch** Mittel (111) zum Randomisieren der Größen der Fourier-Koeffizienten des genannten Wasserzeichens.

6. Anordnung nach Anspruch 5, mit Mitteln zum Randomisieren der Lage des Wasserzeichens in Bezug auf den betreffenden Teil des Informationssignals.

7. Anordnung nach Anspruch 5, wobei die genannten aufeinander folgenden Teile des Informationssignals aufeinander folgende Frames eines bewegenden Videosignals sind.

8. Informationssignal mit einem eingebetteten Wasserzeichen, **dadurch gekennzeichnet, dass** aufeinander folgende Teile des genannten Signals verschiedene Versionen des genannten eingebetteten Wasserzeichens haben, wobei die genannten Versionen in Bezug auf eine Eigenschaft verschieden sind, die für die Detektion des genannten Wasserzeichens irrelevant ist, und dass die Größen der Fourier-Koeffizienten des genannten Wasserzeichens randomisiert werden.

**Revendications**

1. Procédé d'intégration (12, 13) d'un filigrane dans un signal d'information (x) dans lequel des versions différentes dudit filigrane sont intégrées dans des portions successives du signal d'information, lesdites versions étant différentes par rapport à une propriété (φ) qui est peu significative de la détection dudit filigrane, **caractérisé par** l'étape consistant à randomiser (111) les grandeurs (abs) des coefficients de Fourier dudit filigrane.

2. Procédé selon la revendication 1, dans lequel le filigrane inclut au moins une configuration de filigrane de base étant carrelée par-dessus la portion du signal d'information, ladite étape consistant à randomiser les grandeurs étant appliquées aux coefficients de Fourier de ladite configuration de filigrane de base.

3. Procédé selon la revendication 1, comprenant l'étape consistant à randomiser la position du filigrane par rapport à la portion respective du signal d'information.

4. Procédé selon la revendication 1, dans lequel lesdites portions successives du signal d'information sont des trames successives d'un signal vidéo de mouvement.

5. Arrangement pour intégrer un filigrane (WM) dans un signal d'information (x), comprenant des moyens (11, 12, 13) pour intégrer des versions différentes dudit filigrane dans des portions successives du signal d'information, lesdites versions étant différentes par rapport à une propriété ($\varphi$) qui est peu significative de la détection dudit filigrane, **caractérisé par le fait qu'**il comprend des moyens (111) pour randomiser les grandeurs des coefficients de Fourier dudit filigrane.

6. Arrangement selon la revendication 5, comprenant des moyens pour randomiser la position du filigrane par rapport à la portion respective du signal d'information.

7. Arrangement selon la revendication 5, dans lequel lesdites portions successives du signal d'information sont des trames successives d'un signal vidéo de mouvement.

8. Signal d'information avec un filigrane intégré, **caractérisé en ce que** les portions successives dudit signal présentent des versions différentes dudit filigrane étant intégré, lesdites versions étant différentes par rapport à une propriété qui est peu significative de la détection dudit filigrane, **caractérisé en ce que** les grandeurs des coefficients de Fourier dudit filigrane sont randomisées.

FIG.1

FIG.2

FIG.3

FIG.4

FIG.5

FIG.6

FIG.7

FIG.8A

FIG.8B

FIG.9

FIG.10

FIG.11A    FIG.11B